# EUROPÄISCHE PATENTSCHRIFT

(11) **EP 2 847 107 B1**
(45) Veröffentlichungstag und Bekanntmachung des Hinweises auf die Patenterteilung: **08.07.2020**
(21) Anmeldenummer: 13719561.6
(22) Anmeldetag: 02.05.2013
(51) Int. Cl.: B65G 15/32, B01D 33/04

(54) **FÖRDERANLAGE MIT EINEM STOSSABSORPTIONSFESTEN FÖRDERGURT**
CONVEYING INSTALLATION HAVING AN IMPACT ABSORPTION RESISTANT CONVEYING BELT
INSTALLATION DE TRANSPORT DOTÉE D'UNE COURROIE DE CONVOYEUR RÉSISTANTE À L'ABSORPTION D'IMPACTS

(30) Priorität: 07.05.2012 DE 102012103965
(43) Veröffentlichungstag der Anmeldung: 18.03.2015
(73) Patentinhaber: ContiTech Transportbandsysteme GmbH, 30165 Hannover (DE)
(72) Erfinder: THOMCZYK, Andrea, 37079 Göttingen (DE); KANTOREK, Frank, 31275 Lehrte (DE); WORM, Martin, 37154 Northeim (DE)
(74) Vertreter: Preusser, Andrea
(86) Internationale Anmeldenummer: PCT/EP2013/059089
(87) Internationale Veröffentlichungsnummer: WO 2013/167442

(56) Entgegenhaltungen:
- EP-A1- 2 228 325
- WO-A1-2009/092174
- CA-A- 1 021 509
- FR-A- 1 016 573
- FR-A1- 2 273 664
- FR-A1- 2 596 318
- US-A- 2 295 432
- US-A- 3 880 274
- US-A- 4 674 622

## Beschreibung

Die Erfindung betrifft eine Förderanlage mit einem Fördergurt, umfassend eine tragseitige und laufseitige Deckplatte, wenigstens eine zwischen tragseitiger und laufseitiger Deckplatte angebrachte weitere, d.h. zusätzliche, Schicht aufgebaut aus mindestens einem polymeren Werkstoff, sowie ferner mit Trommeln, Tragrollen und mit Traggerüsten, wobei die Förderanlage ein materialförderndes Obertrum mit einer Aufgabestelle für das Fördermaterial und ein zumeist materialfreies Untertrum ausbildet. Es gibt allerdings auch Förderanlagen, die zusätzlich im Untertrum beladen werden.

Eine gattungsgemäße Förderanlage wird insbesondere in DE 36 06 129 A, EP 1 187 781 B1, DE 36 12 765 A1, EP 1222 126 B1, DE 43 33 839 B4, WO 2005/023688 A1, EP 0 336 385 B1, WO 2008/034483 A1, EP 1 053 447 B1 und US 7 178 663 B2 detailliert beschrieben.

Die tragseitige und laufseitige Deckplatte eines Fördergurtes als Kernbauteil einer Förderanlage bestehen zumeist aus einer Folie oder einem Gewebe oder bevorzugt aus einer Kautschukmischung, enthaltend wenigstens eine Kautschukkomponente oder einen Kautschukkomponentenverschnitt, wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente).

Bedingt durch die Vulkanisation der Kautschukmischung erfährt der Fördergurt die erforderlichen elastischen Eigenschaften.

Diese elastischen Eigenschaften vor allem der tragseitigen Deckplatte (Tragseite) eines Fördergurtes dienen unter anderem zur Absorption der Aufprallenergie (Stoßabsorption) der geförderten Güter auf dem Fördergurt. Diese Stoßabsorption, d.h. die Minderung der Aufprallenergie, ist ein wesentliches Merkmal für die Lebensdauer des Fördergurtes, insbesondere der tragseitigen Deckplatte.

In der FR 1.016.573 wird eine Förderanlage mit einem Fördergurt, umfassend eine tragseitige Deckplatte und eine laufseitige Deckplatte und einem eingebetteten Zugträger , offenbart, wobei sich zwischen der tragseitigen und laufseitigen Deckplatte wenigstens eine weitere, d.h. zusätzliche, Schicht befindet, die aus einer geschäumten Kautschuk besteht.

Im Rahmen einer Weiterentwicklung besteht die Aufgabe der Erfindung darin, eine Förderanlage bereitzustellen, deren Fördergurt sich durch eine weitere Verbesserung hinsichtlich der Minderung der Aufprallenergie und der sich daraus ergebenden erhöhten Lebensdauer auszeichnet.

Gelöst wird diese Aufgabe durch eine Förderanlage mit den Merkmalen des Anspruchs 1.

Überraschenderweise wurde festgestellt, dass sich eine derartige zusätzliche Schicht aus einer geschäumten Polymermischung positiv auf die Stoßabsorption auswirkt, ohne die weiteren Eigenschaften des Fördergurtes und damit der gesamten Förderanlage zu beeinträchtigen.

Im Gegenteil, durch das Vorhandensein von wenigstens einer geschäumten zusätzlichen Schicht ergibt sich eine Gewichtsreduzierung, die sich positiv auf die Kosten und den Energieverbrauch auswirkt.

Die begriffe Polymermischung und Kautschukmischung werden synonym verwendet. Die Erfindung ist grundsätzlich für alle Förderanlagen und Fördergurte geeignet.

Zu nennen sind hier insbesondere Stahlseilfördergurte und Textilfördergurte. Weitere Vorteile der Erfindung zeigen sich vor allem bei Heißfördergurten, die als Stahlseil- oder Textilfördergurte ausgebildet sein können, und hoch temperierte (zumeist > 250°C) Fördergüter befördern müssen. Diese bestehen bisher aus Vollgummischichten, die unter der genannten Wärmebeanspruchung aufgrund der damit verbundenen Zerstörung der Karkasse, insbesondere der Gewebekarkasse, eine deutlich erhöhte Neigung zu Ausfällen haben. Das Vorhandensein wenigstens einer geschäumten zusätzlichen Schicht aus mindestens einem polymeren Werkstoff führt in diesem Fall dazu, dass der Wärmedurchgang vermindert und die Zerstörung der Haftgummierung des Skimmgummis und der Gummi/Zugträgerhaftung, insbesondere Gummi/Gewebehaftung, verhindert wird, was zusammenfassend die Lebensdauer signifikant erhöht.
Weiterhin ist die Erfindung vorteilhaft für spezielle Fördergurte verwendbar, wie beispielsweise Filtergurte, die unter anderem aus DE 42 03 359 A1 bekannt sind. Filtergurte fördern und trennen Feststoffe und Flüssigkeiten, wie es zum Beispiel bei der Aufbereitung von Mineralien, Erzen, Chemikalien, Farbstoffen, Nahrungsmitteln, Kohle und Papier, etc. erforderlich ist. Auch hierbei ist neben einer Reduzierung der Aufprallenergie eine gute chemische, thermische und mechanische Beständigkeit notwendig.

Die tragseitige und / oder laufseitige Deckplatte können als Folie oder Gewebe ausgebildet sein.
Bevorzugt ist die tragseitige und laufseitige Deckplatte aus jeweils mindestens einem polymeren Werkstoff aufgebaut. Bei dem polymeren Werkstoff handelt es sich bevorzugt um einen Kautschuk, der ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (HR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM) handeln.
Die genannten Kautschuke können hierbei alleine oder im Verschnitt eingesetzt werden. Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Die Verwendung von CR bietet insbesondere bei Filtergurten eine zusätzliche Gewichtseinsparung. Im Übertagebergbau haben ferner NR sowie die oben erwähnten Verschnitte (DE 10 2009 043 904 A1) eine größere Bedeutung erlangt. Handelt es sich bei der tragseitigen und / oder laufseitigen Deckplatte um eine Folie oder ein Gewebe, so können hierbei die genannten Werkstoffe ebenso zum Einsatz kommen.

Besonders bevorzugt ist es, wenn die Folie auf der Basis wenigstens eines Fluorpolymers aufgebaut ist. In diesem Fall ist eine zusätzliche optimierte Medienbeständigkeit gewährleistet.

Des weiteren können die beiden Deckplatten neben der Kautschukkomponente wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente) enthalten.

Der Fördergurt ist erfindungsgemäß noch mit einem eingebetteten Zugträger versehen, wobei der eingebettete Zugträger in Fördergurtlängsrichtung parallel verlaufende Seile aus Stahl sind.

In die tragseitige und/oder laufseitige Deckplatte können zudem noch folgende Bauteile eingebettet sein: Leiterschleifen, Transponder, Barcodes, eine Polymermatrix mit eingemischten detektierbaren Teilchen oder andere detektierbare Elemente.

Der Fördergurt kann noch mit einem Aufbauteil, beispielsweise mit einem Mitnehmerteil, Führungsteil sowie mit Rand- und Seitenwandprofilen versehen sein. Derartige Aufbauteile bestehen aus einem polymeren Werkstoff (Elastomer, Thermoplastisches Elastomer, Thermoplast) und werden fußseitig mit der tragseitigen Oberfläche des elastischen Fördergurtes verklebt und / oder vulkanisiert.

Weitere Bauteile einer Förderanlage können sein:
- Umlenkrollen oder Umlenktrommeln
- Niederhalterollen bei Rohrfördergurtanlagen
- Korrekturrollen, insbesondere bei Rohrfördergurtanlagen
- Schurren an der Aufgabestelle für das Fördermaterial
- Überwachungseinrichtungen

Erfindungswesentlich ist, dass der Fördergurt zwischen den beiden Deckplatten wenigstens eine weitere, d.h. zusätzliche, Schicht aus mindestens einem polymeren Werkstoff enthält, die aus einer geschäumten Polymermischung besteht.
Die qualitative und / oder quantitative Zusammensetzung der geschäumten Polymermischung, abgesehen von den notwendigen Blähmitteln, kann hierbei gleich oder verschieden der Zusammensetzungen von tragseitiger Decklage und / oder laufseitiger Decklage sein. In einer besonders bevorzugten Ausführungsform ist die qualitative und / oder quantitative, insbesondere die qualitative, Zusammensetzung, abgesehen von den notwendigen Blähmitteln, gleich der Zusammensetzung der Kautschukmischung von tragseitiger Decklage und / oder laufseitiger Decklage. Dadurch wird die Komplexität im Produktionsprozess nicht erhöht und es ergeben sich weitere Vorteile hinsichtlich Zeit und Kosten.
Der Kautschuk für die geschäumte Polymerschicht ist ausgewählt aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM). Die Verwendung von CR bietet insbesondere bei Filtergurten eine zusätzliche Gewichtseinsparung.

Die genannten Kautschuke können hierbei alleine oder im Verschnitt eingesetzt werden. Des Weiteren kann die geschäumte Polymerschicht wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Alumiumhydroxid, Talk, Kreide, etc. verwendet werden.

Ebenso können alle der fachkundigen Person bekannten weiteren Zusatzstoffe, wie Pigmente, Weichmacher, Ozon- und Alterungsschutzmittel eingesetzt werden.

Die Vulkanisation der geschäumten Schicht erfolgt in der Regel peroxidisch, z.B. wenn EPDM als Kautschukkomponente verwendet wird, oder auch als Schwefelvulkanisation bei Verwendung von NR, BR oder SBR oder auch bisphenolisch bei der Verwendung von bspw. FPM.

Erfindungsgemäß enthält die geschäumte Polymerschicht noch wenigstens ein Blähmittel auf Basis von wenigstens einem Acrylnitrilpolymer, erhältlich unter anderem unter dem Handelsnamen Expancel®.

Des Weiteren können bei Bedarf noch Schaumstabilisatoren hinzugefügt werden. Die Erfindung wird nun anhand eines Ausführungsbeispiels unter Bezugnahme auf schematische Zeichnungen erläutert. Die Erfindung ist nicht auf die gezeigten Zeichnungen beschränkt.

Es zeigen:
- Fig. 1: eine Förderanlage mit einem Fördergurt, einer Trommel und Tragrollen;
- Fig. 2: eine Förderanlage gemäß Fig. 1 mit Draufsicht auf die tragseitige und laufseitige Deckplatte eines Fördergurtes im Bereich der Trommel.
- Fig. 3: Querschnitt durch einen Fördergurt mit einer geschäumten Polymerschicht zwischen tragseitiger und laufseitiger Deckplatte
- Fig. 4: Querschnitt durch einen Fördergurt mit zwei geschäumten Polymerschichten zwischen tragseitiger und laufseitiger Deckplatte
- Fig. 5: Querschnitt durch einen Fördergurt mit einer geschäumten Polymerschicht zwischen zwei Gewebelagen

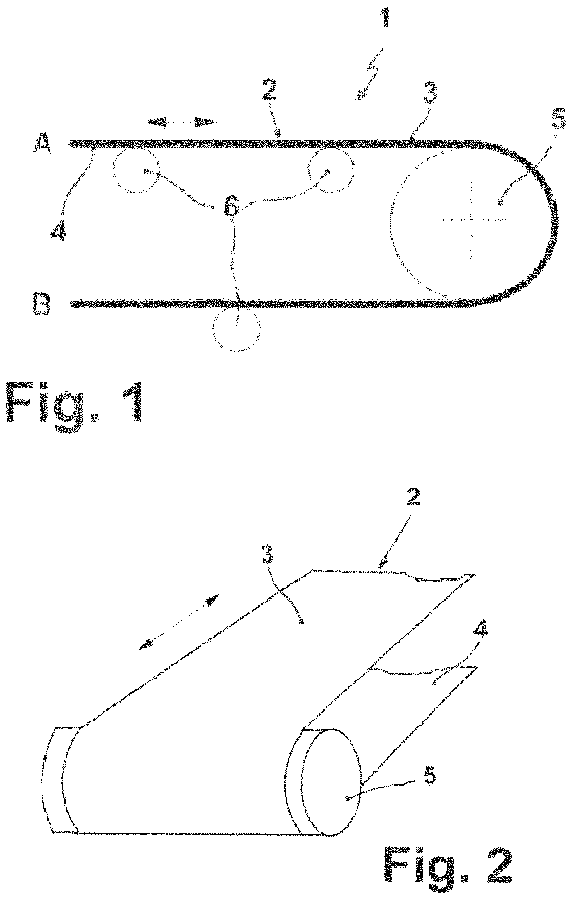

Fig. 1 zeigt eine Förderanlage 1 mit einem Fördergurt 2, umfassend eine tragseitige Deckplatte 3 für das Fördermaterial und eine laufseitige Deckplatte 4 aus jeweils einem polymeren Werkstoff mit elastischen Eigenschaften, beispielsweise aus einer vulkanisierten Kautschukmischung auf der Basis von CR, sowie mit einem eingebetteten Zugträger, beispielsweise in Form von Stahlseilen. Die laufseitige Deckplatte 4 hat Kontakt mit einer Trommel 5, die die Antriebstrommel oder Umkehrtrommel sein kann, und stützt sich zudem innerhalb des Obertrums A und Untertrums B an Tragrollen 6 in Form eines Tragrollensystems ab. Die Laufrichtung des Fördergurtes 2 ist durch die Pfeilrichtung dargestellt.

Fig. 2 zeigt nun die tragseitige Deckplatte 3 und laufseitige Deckplatte 4 des Fördergurtes 2 gemäß der Förderanlage nach Fig. 1 als großflächiges Gebilde. Zwischen den beiden Deckplatten 3 und 4 befindet sich dabei wenigstens eine weitere, d.h. zusätzliche, Schicht aus mindestens einem polymeren Werkstoff, die aus einer geschäumten Polymermischung besteht.

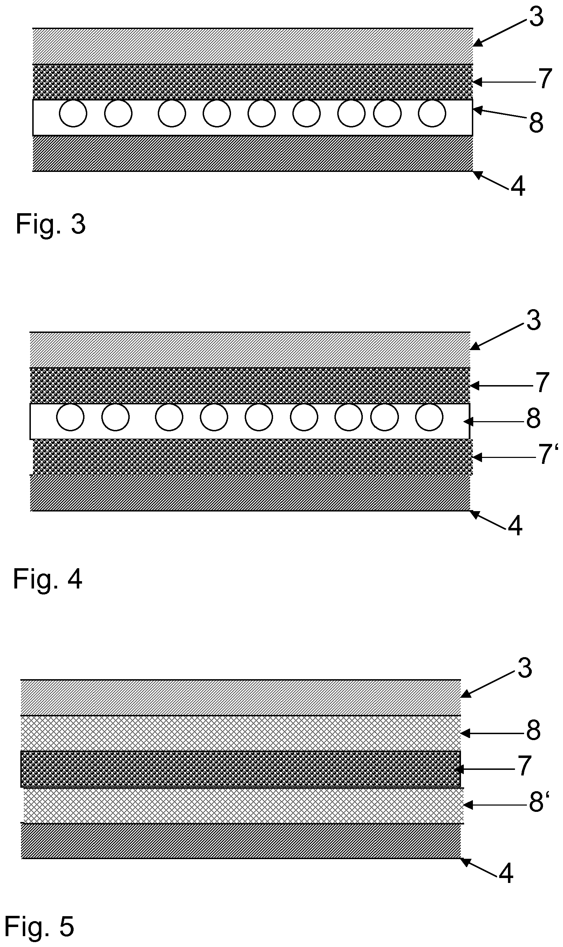

Fig. 3 zeigt eine zusätzliche geschäumte Schicht 7, die sich zwischen tragseitiger Deckplatte 3 und laufseitiger Deckplatte 4 befindet, wobei zusätzlich noch eine Lage eines eingebetteten Zugträgers 8 vorhanden ist und die zusätzliche geschäumte Schicht 7 in direktem Kontakt zu der Lage des eingebetteten Zugträgers 8 und der tragseitigen Deckplatte 3 steht.

Fig. 4 zeigt zwei zusätzliche geschäumte Schichten 7, 7', die gleich oder verschieden voneinander sein können und die sich zwischen tragseitiger Deckplatte 3 und laufseitiger Deckplatte 4 befinden, wobei zusätzlich noch eine Lage eines eingebetteten Zugträgers 8 vorhanden ist. Die erste zusätzliche geschäumte Schicht 7 steht hierbei in direktem Kontakt zu der Lage des eingebetteten Zugträgers 8 und der tragseitigen Deckplatte 3, während die zweite zusätzliche geschäumte Schicht 7' in direktem Kontakt zu der Lage des eingebetteten Zugträgers 8 und der laufseitigen Deckplatte 4 steht.

Fig. 5 zeigt eine zusätzliche geschäumte Schicht 7, die sich zwischen tragseitiger Deckplatte 3 und laufseitiger Deckplatte 4 befindet, wobei zusätzlich zwei Lagen eingebetteter Zugträgers 8, 8' vorhanden sind, die in einer Ausführungsform, der nicht Teil der vorliegenden Erfindung ist, in Form von Gewebelagen vorliegen und die gleich oder verschieden voneinander sein können. Die zusätzliche geschäumte Schicht 7 steht hierbei in direktem Kontakt zu den beiden Lagen der eingebetteten Zugträger 8, 8'.

### Bezugszeichenliste

- 1: Förderanlage
- 2: Fördergurt
- 3: tragseitige Deckplatte
- 4: laufseitige Deckplatte
- 5: Trommel (Antriebstrommel, Umkehrtrommel)
- 6: Tragrollen
- A: Obertrum
- B: Untertrum
- 7, 7': geschäumte Polymerschicht
- 8, 8': eingebettete Zugträger

## Patentansprüche

1. Förderanlage (1) mit einem Fördergurt (2), umfassend eine tragseitige Deckplatte (3) und eine laufseitige Deckplatte (4) und einem eingebetteten Zugträger (8, 8'), sowie ferner mit Trommeln (5), Tragrollen (6) und mit Traggerüsten, wobei die Förderanlage ein materialförderndes Obertrum (A) mit einer Aufgabestelle für das Fördermaterial und ein zumeist materialfreies Untertrum (B) ausbildet, **dadurch gekennzeichnet, dass** sich zwischen der tragseitigen (3) und laufseitigen (4) Deckplatte wenigstens eine weitere, d.h. zusätzliche, Schicht (7) befindet, die aus einer geschäumten Polymermischung besteht und wobei die zusätzliche-geschäumte Schicht (7) in direktem Kontakt zu der Lage des eingebetteten Zugträgers (8) und der tragseitigen Deckplatte (3) steht und wobei der Kautschuk für die geschäumte Polymerschicht ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder chlorsulfonierter Polyethylenkautschuk (CSM) und / oder Silikonkautschuk (MVQ) und / oder Fluorkautschuk (FPM) und wobei die geschäumte Polymermischung ein Blähmittel auf Basis von wenigstens einem Acrylnitrilpolymer enthält und wobei der eingebettete Zugträger in Fördergurtlängsrichtung parallel verlaufende Seile aus Stahl sind.

2. Förderanlage nach Anspruch 1, **dadurch gekennzeichnet, dass** die tragseitige (3) und / oder laufseitige (4) Deckplatte aus wenigstens einer Polymermischung aufgebaut ist.

3. Förderanlage nach Anspruch 1 oder 2, **dadurch gekennzeichnet, dass** die geschäumte Polymermischung EPDM und / oder NR und / oder SBR und / oder NBR und / oder CR und / oder ACM und / oder ECO und / oder CSM und / oder MVQ und / oder FPM enthält.

4. Förderanlage nach einem der Ansprüche 1 bis 3, **dadurch gekennzeichnet, dass** die qualitative und / oder quantitative Zusammensetzung der geschäumten Polymermischung der zusätzlichen Schicht (7) gleich der qualitativen und / oder quantitativen Zusammensetzung der Polymermischung der tragseitigen (3) und / oder laufseitigen (4) Deckplatte ist.

5. Förderanlage nach einem der Ansprüche 1 bis 4, **dadurch gekennzeichnet, dass** der der Fördergurt (2) ein Heißfördergurt ist.

6. Förderanlage nach einem der Ansprüche 1 bis 4, **dadurch gekennzeichnet, dass** der der Fördergurt (2) als Filtergurt ausgebildet ist.

## Claims

1. Conveying installation (1) having a conveying belt (2), comprising a load-bearing-side cover panel (3) and a running-side cover panel (4) and an embedded tension member (8, 8'), and also having drums (5), load-bearing rollers (6) and load-bearing frameworks, wherein the conveying installation forms a material-conveying upper strand (A), with a feed location for the conveying material, and a mostly material-free lower strand (B), **characterized in that** at least one further, i.e. additional, layer (7), which consists of a foamed polymer blend, is located between the load-bearing-side cover panel (3) and the running-side cover panel (4), and wherein the additional foamed layer (7) is in direct contact with the layer of the embedded tension member (8) and the load-bearing-side cover panel (3) and wherein the rubber for the foamed polymer layer is selected from the group consisting of natural rubber (NR), and/or butadiene rubber (BR) and/or chloroprene rubber (CR) and/or styrene-butadiene rubber (SBR) and/or nitrile rubber (NBR) and/or butyl rubber (IIR) and/or ethylene-propylene rubber (EPM) and/or ethylene-propylene-diene rubber (EPDM) and/or polyacrylate rubber (ACM) and/or epichlorohydrin rubber (ECO) and/or chlorosulfonated polyethylene rubber (CSM) and/or silicone rubber (MVQ) and/or fluoro rubber (FPM) and wherein the foamed polymer blend contains an expanding agent on the basis of at least one acrylonitrile polymer and wherein the embedded tension member comprises strands of steel running parallel in the longitudinal direction of the conveying belt.

2. Conveying installation according to Claim 1, **characterized in that** the load-bearing-side cover panel (3) and/or the running-side cover panel (4) is made up of at least one polymer blend.

3. Conveying installation according to Claim 1 or 2, **characterized in that** the foamed polymer blend contains EPDM and/or NR and/or SBR and/or NBR and/or CR and/or ACM and/or ECO and/or CSM and/or MVQ and/or FPM.

4. Conveying installation according to one of Claims 1 to 3, **characterized in that** the qualitative and/or quantitative composition of the foamed polymer blend of the additional layer (7) is the same as the qualitative and/or quantitative composition of the polymer blend of the load-bearing-side cover panel (3) and/or the running-side cover panel (4).

5. Conveying installation according to one of Claims 1 to 4, **characterized in that** the conveying belt (2) is a hot conveying belt.

6. Conveying installation according to one of Claims 1 to 4, **characterized in that** the conveying belt (2) is formed as a filter belt.

## Revendications

1. Installation de transport (1) dotée d'une courroie de transport (2), comprenant une plaque de recouvrement côté porteur (3) et une plaque de recouvrement côté déplacement (4) et un porteur de traction intégré (8, 8'), ainsi qu'également dotée de tambours (5), de rouleaux porteurs (6) et dotée de châssis porteurs, dans laquelle l'installation de transport forme un brin supérieur de transport de matériau (A) doté d'un point de chargement pour le matériau à transporter et un brin inférieur (B) majoritairement dépourvu de matériau, **caractérisée en ce qu'**au moins une autre couche (7), c.-à.-d. une couche supplémentaire, qui est constituée par un mélange de polymère moussé, se trouve entre la plaque de recouvrement côté porteur (3) et côté déplacement (4), et dans laquelle la couche moussée supplémentaire (7) est en contact direct avec la strate du porteur de traction intégré (8) et la plaque de recouvrement côté porteur (3), et dans laquelle le caoutchouc pour la couche de polymère moussée est choisi dans le groupe constitué par le caoutchouc naturel (NR) et/ou le caoutchouc de butadiène (BR) et/ou le caoutchouc de chloroprène (CR) et/ou le caoutchouc de styrène-butadiène (SBR) et/ou le caoutchouc de nitrile (NBR) et/ou le caoutchouc de butyle (IIR) et/ou le caoutchouc d'éthylène-propylène (EPM) et/ou le caoutchouc d'éthylène-propylène-diène (EPDM) et/ou le caoutchouc de polyacrylate (ACM) et/ou le caoutchouc d'épichlorhydrine (ECO) et/ou le caoutchouc de polyéthylène chlorosulfoné (CSM) et/ou le caoutchouc de silicone (MVQ) et/ou le caoutchouc fluoré (FPM), et dans laquelle le mélange de polymère moussé contient un agent gonflant à base d'au moins un polymère d'acrylonitrile, et dans laquelle le porteur de traction intégré consiste en des câbles en acier passant en parallèle dans la direction longitudinale de la courroie de transport.

2. Installation de transport selon la revendication 1, **caractérisée en ce que** la plaque de recouvrement côté porteur (3) et/ou côté déplacement (4) est formée par au moins un mélange de polymère.

3. Installation de transport selon la revendication 1 ou 2, **caractérisée en ce que** le mélange de polymère moussé contient de l'EPDM et/ou du NR et/ou du SBR et/ou du NBR et/ou du CR et/ou de l'ACM et/ou de l'ECO et/ou du CSM et/ou du MVQ et/ou du FPM.

4. Installation de transport selon l'une quelconque des revendications 1 à 3, **caractérisée en ce que** la composition qualitative et/ou quantitative du mélange de polymère moussé de la couche supplémentaire (7) est identique à la composition qualitative et/ou quantitative du mélange de polymère de la plaque de recouvrement côté porteur (3) et/ou côté déplacement (4) .

5. Installation de transport selon l'une quelconque des revendications 1 à 4, **caractérisée en ce que** la courroie de transport (2) est une courroie de transport chauffée.

6. Installation de transport selon l'une quelconque des revendications 1 à 4, **caractérisée en ce que** la courroie de transport (2) est configurée sous la forme d'une courroie de filtration.
